Europäisches Patentamt

European Patent Office

Office européen des brevets

(11) Numéro de publication : **0 294 440 B1**

(12) **FASCICULE DE BREVET EUROPEEN**

(45) Date de publication du fascicule du brevet :
26.02.92 Bulletin 92/09

(51) Int. Cl.⁵ : **E21B 23/00, E21B 47/00, G01V 1/40**

(21) Numéro de dépôt : **88900462.8**

(22) Date de dépôt : **23.12.87**

(86) Numéro de dépôt international :
**PCT/FR87/00515**

(87) Numéro de publication internationale :
**WO 88/05108 14.07.88 Gazette 88/15**

(54) **SONDE ET SON DISPOSITIF D'ANCRAGE MULTIDIRECTIONNEL DANS UN PUITS.**

(30) Priorité : **24.12.86 FR 8618258**

(43) Date de publication de la demande :
**14.12.88 Bulletin 88/50**

(45) Mention de la délivrance du brevet :
**26.02.92 Bulletin 92/09**

(84) Etats contractants désignés :
**DE GB IT NL**

(56) Documents cités :
**EP-A- 0 148 667**
**EP-A- 0 178 784**
**FR-A- 2 548 727**
**FR-A- 2 591 757**
**US-A- 3 104 709**
**US-A- 4 610 309**

(73) Titulaire : **INSTITUT FRANCAIS DU PETROLE**
**4, Avenue de Bois Préau**
**F-92502 Rueil-Malmaison (FR)**

(72) Inventeur : **WITTRISCH, Christian**
**24, rue George-Sand**
**F-92500 Rueil-Malmaison (FR)**

# Description

La présente invention concerne un dispositif d'ancrage d'un corps de sonde dans un puits.

L'ancrage d'une sonde dans les puits peut être réalisé par exemple par déploiement d'un ou de plusieurs bras mobiles pouvant pivoter par rapport au corps de la sonde d'une position d'escamotage à une position d'écartement où ils viennent s'ancrer dans la paroi du puits. Quand la sonde comporte par exemple deux bras, ils sont placés sur une même génératrice du corps de la sonde. Des dispositifs d'ancrage dans ce type sont décrits par exemple dans les demandes de brevet FR-A-2 548 727 ou EP-A-178 784.

Lorsque de telles sondes sont équipées de deux éléments de mesure unidirectionnels sensibles aux mouvements des parois du puits, ces éléments de mesure sont placés de manière que le plan défini par le déploiement des bras soit un plan bissecteur pour les axes de mesure de chacun de ces éléments. Le plan de déploiement contient l'axe de la sonde. Les axes de mesure sont généralement perpendiculaires entre eux et coupent l'axe de la sonde en un même point.

De cette manière, la sonde et ses bras touchent la paroi suivant un plan. Si cette disposition transmet bien aux éléments de mesure les mouvements de la formation qui sont contenus dans ce plan, elle transmet mal les mouvements qui n'y sont pas contenus et notamment ceux qui sont perpendiculaires à ce plan.

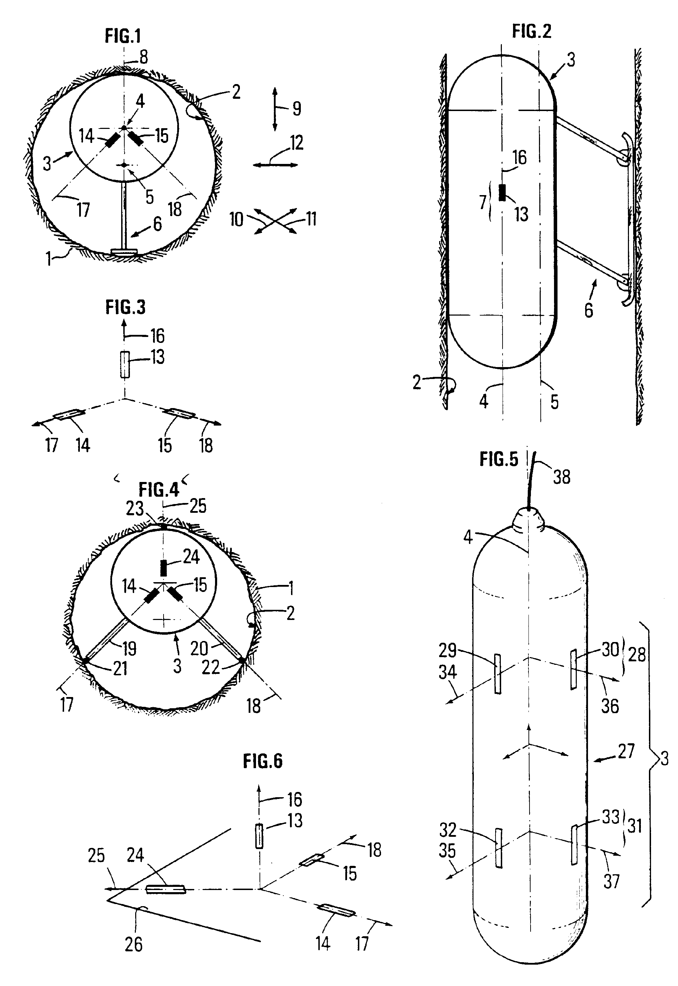

Pour les mouvements hors de ce plan la rigidité de l'ensemble sonde et bras d'ancrage est faible et des mouvements parasites notamment de vibrations, dus à ce manque de rigidité sont détectés par les éléments de mesure. Les figures 1 et 2 illustrant les dispositifs selon l'art antérieur, seront décrites plus loin.

Par la demande de brevet EP-A-148 667, on connait un dispositif d'ancrage dans un puits d'une ou de plusieurs sondes de mesure équipées de plusieurs ensembles de géophones supportés par des bras radiaux et déplaçables radialement en direction de la paroi du puits par extension de ressorts. Le corps de chaque sonde est immobilisé dans l'axe du puits par déploiement de deux ensembles de bras d'ancrage. Chaque ensemble comporte trois bras disposés à 120° les uns par rapport aux autres de manière à obtenir un centrage du corps de chaque sonde.

La présente invention concerne un dispositif d'ancrage d'un corps de sonde dans un puits, comportant des bras d'ancrage escamotables dont l'ouverture a pour effet de décentrer le corps de la sonde et de le plaquer contre la paroi du puits.

Le dispositif est caractérisé en ce qu'il comporte un couple de bras disposés sensiblement à un même premier niveau de l'axe de la sonde et décalés angulairement l'un par rapport à l'autre relativement à l'axe de la sonde.

Le corps de la sonde est de préférence pourvu d'une portion de paroi extérieure au voisinage du plan bissecteur des plans de déploiement respectifs des bras de ce couple, et à l'opposé de ceux-ci, cette portion de paroi étant adaptée à permettre une bonne application du corps contre la paroi du puits.

Suivant des modes de réalisation préférés les bras de chaque couple peuvent être décalés par rapport à l'axe de ladite sonde, d'un angle de 90° ou de 120°.

Suivant un autre mode de réalisation, le dispositif selon l'invention peut comporter un deuxième couple de bras situés à un deuxième niveau différent de celui du premier couple de bras, les bras correspondants des deux couples étant disposés dans le même plan de déploiement, et les deux niveaux peuvent être situés de part et d'autre d'éléments de mesure équipant la sonde.

La présente invention concerne également une sonde équipée du dispositif d'ancrage décrit précédemment. Cette sonde peut comporter au moins un élément de mesure directionnel opérant dans le plan de déploiement de l'un des bras.

Le plan de déploiement de l'un des bras peut contenir l'axe de la sonde, la direction de mesure de l'un des éléments de mesure étant sensiblement perpendiculaire à l'axe de ladite sonde.

Au moins un élément de mesure de la sonde peut être disposé sensiblement au voisinage de l'un desdits niveaux.

La sonde peut comporter aussi deux éléments de mesure unidirectionnels dont l'un peut opérer dans le plan de déploiement de l'un des bras et dont l'autre est placé dans le plan de déploiement d'un autre bras.

Les bras sont placés par exemple à un même niveau dudit axe de la sonde et la sonde comporte alors au moins un élément de mesure placé sensiblement au voisinage de ce même niveau et effectuer des mesures selon des directions sensiblement perpendiculaires à l'axe de la sonde.

De préférence deux, et éventuellement trois éléments pourront faire des mesures dans une direction perpendiculaire à l'axe de la sonde.

La sonde selon la présente invention peut également comporter un élément de mesure unidirectionnel orienté suivant l'axe de la sonde.

La présente invention est applicable par exemple à l'ancrage de sondes dans des puits forés pour la prospection, ou pour la production. Les mesures effectuées peuvent être des mesures de sismique ou des écoutes de fracturations, etc. Les éléments de mesure sont par exemple des géophones ou des accéléromètres.

La présente invention sera mieux comprise et ses avantages apparaîtront plus clairement à la description qui suit de modes particuliers de réalisation, nullement limitatifs, illustrés par les figures, ci-annexées, parmi lesquelles :

– les figures 1 et 2 illustrent l'art antérieur,

– la figure 3 illustre une disposition des éléments de mesure,

– la figure 4 illustre une disposition particulière des bras et des éléments de mesure selon la présente invention,

– la figure 5 montre un mode de réalisation comportant deux niveaux d'ancrage des bras, les éléments de mesure étant placés entre ces deux niveaux, et

– la figure 6 représente une configuration particulière d'agencement des capteurs.

La présente description concerne les mesures effectuées dans les formations géologiques et plus particulièrement celles en relation avec le domaine pétrolier.

Les figures 1 et 2 illustrent l'art antérieur. La référence 1 désigne une formation géologique dans laquelle est foré un puits 2. Dans ce puits est descendu une sonde 3. La référence 4 désigne l'axe de la sonde et la référence 5 celui du puits. La référence 6 désigne le bras d'ancrage. Celui-ci peut être un système utilisant un parallélogramme déformable, tel celui illustré à la figure 2 ou être d'un autre type, tel que par exemple un simple bras.

La zone 7 correspond à la partie de l'axe de la sonde à laquelle sont sensiblement situés les éléments de mesure et/ou le bras, cette zone est qualifiée de niveau de l'axe.

Ainsi selon l'art antérieur la sonde est fixée aux parois du puits selon un plan de fixation correspondant au plan de la figure 2 et ayant pour tracé l'axe référencé 8 sur la figure 1.

Une telle configuration transmet correctement les mouvements de la formation géologique compris dans ce plan et illustrés par la flèche double 9 (cf. figure 1), mais mal les mouvements qui n'y sont pas compris.

Ainsi les mouvements illustrés par les flèches doubles 10 et 11 qui forment un angle de 45° avec le plan 8 sont moyennement transmis aux éléments de mesure et ceux illustrés par la flèche 12 le sont très mal, cela d'autant plus que l'ensemble de la sonde 3 et du bras 6 sont peu rigides dans le sens illustré par la flèche 12 qui est perpendiculaire au plan 8.

En résumé le couplage mécanique entre la formation et la sonde n'est bon que lorsque les mouvements de la formation sont compris dans le plan de fixation 8 de la sonde 3.

La figure 3 représente un trièdre classique de mesure. Les mesures sont effectuées, par exemple, par les trois éléments de mesure unidirectionnels 13, 14 et 15 qui effectuent respectivement des mesures suivant les directions 16, 17 et 18, correspondant aux axes du trièdre.

Classiquement l'axe 16 est parallèle ou confondu avec l'axe de la sonde 4 et les axes 17 et 18 forment un angle de 45° avec le plan de fixation 8 de la sonde 3. Les éléments de mesure 13, 14 et 15 ont été reportés sur les figures 1 et 2.

La figure 4 représente un mode de réalisation du dispositif d'ancrage selon la présente invention. Selon ce mode de réalisation, la sonde comporte un couple de bras 19, 20, disposés sensiblement au niveau des éléments de mesure 13, 14 et 15. L'axe 16 de l'élément de mesure 13 est placé parallèlement à l'axe 4 de la sonde et les bras 19 et 20 se déploient sensiblement dans des plans contenant les axes de mesure 17 et 18 des éléments de mesure 14 et 15. Ainsi le couplage mécanique entre la sonde 3 et la formation géologique est bon notamment dans les directions de mesure des capteurs 14 et 15.

La sonde est fixée à la formation géologique sensiblement selon trois segments dont la trace sur la figure 4 porte les références 21 et 22 en ce qui concerne, les bras 19 et 20, et 23 en ce qui la génératrice de la sonde. Ce dernier point est important, car il est particulièrement souhaitable que le corps de la sonde soit en contact direct avec les parois du puits 2.

Aussi le corps de a sonde peut être directement en contact avec la paroi du puits sensiblement suivant une génératrice. Ceci assure une bonne transmission de la formation géologique à l'élément sensible de la sonde des phénomènes à mesurer et diminue de manière sensible les phénomènes parasites, notamment les vibrations de la sonde et des bras observés sur les dispositifs antérieurs.

Selon un mode de réalisation particulièrement intéressant, les éléments de mesure pourront comporter un élément de mesure supplémentaire, placé au même niveau que les éléments de mesure 14 et 15 et dont l'axe de mesure 25 est sensiblement parallèle ou confondu avec la bissectrice des axes de mesure 17 et 18 des éléments de mesure 14 et 15.

Sur la figure 4 les axes 17 et 18 des éléments de mesure 14 et 15 font entre eux un angle de 90° et un angle de 135° avec l'axe 25 de l'élément de mesure 24.

Selon un autre mode de réalisation, ces trois éléments de mesure 14, 15 et 24 ont des axes de mesure 17, 18 et 25 qui font, pris deux à deux, un angle sensiblement égal à 120° et sont compris sensiblement dans un même plan 26.

L'élément de mesure 13 pourra avoir un axe sensiblement perpendiculaire à ce plan 26.

Cette disposition est représentée à la figure 6.

Les directions 17, 18 et 25 correspondent sensiblement aux directions de couplage mécanique de la sonde.

La figure 5 illustre un autre mode de réalisation. Selon ce mode de réalisation, le dispositif d'ancrage comporte deux couples de bras. Ces couples de bras sont placés de part et d'autre des éléments de mesure 27.

Le premier couple de bras est situé à un premier niveau 28 et comporte les bras 29 et 30. Le deuxième couple de bras est situé à un deuxième niveau 31 et comporte deux bras 32 et 33.

Selon ce mode de réalisation, les bras se déploient en restant sensiblement dans un plan parallèle à l'axe de la sonde ou de préférence le contenant (cas de la figure 5).

Les plans de déploiement d'un bras du premier couple 28 d'un bras du deuxième sont confondus, ce plan constituant un premier plan de déploiement. Il en est de même pour les bras restant ou premier couple et du deuxième couple qui définissent un deuxième plan de déploiement.

Le premier plan de déploiement est défini par l'axe 4 de la sonde 3 et les directions de déploiement 34 et 35 respectivement des bras 29 et 32.

Le deuxième plan est défini par l'axe 4 de la sonde 3 et par les directions de déploiement 36 et 37 respectivement des bras 30 et 33.

Sur la figure 5 les premier et deuxième plans de déploiement forment entre eux un angle de 90°. Bien entendu, ces plans pourront former un angle de 120°.

Les directions de mesure de deux éléments de mesure sont compris dans ces plans et sont perpendiculaires à l'axe 4 de la sonde 3. Il existe un troisième élément de mesure dont l'axe de mesure est parallèle à l'axe 4 de la sonde 3.

Bien entendu, on ne sortira pas du cadre de la présente invention si la sonde comporte un élément de mesure unidirectionnel supplémentaire dont l'axe de mesure est perpendiculaire à l'axe 4 de la sonde 3 et dont l'axe appartient au plan sensiblement défini par l'axe 4 de la sonde 3 et la génératrice de contact entre la formation géologique et la sonde 3 et que l'on pourrait qualifier de troisième plan de déploiement.

Sur la figure 5, la référence 38 désigne un organe de liaison souple servant à la manipulation de la sonde avant ancrage et qui est détendu

au cours de la ou des mesures, de manière à ne pas transmettre de vibrations parasites à la sonde de mesure.

La procédure de mise en place d'une telle sonde pourra être inspirée de celle décrite dans le brevet français 2.544.013.

Les éléments de mesures directionnels pourront être des capteurs accéléromètres ou des géophones triaxiaux.

Ces capteurs pourront servir à enregistrer des vibrations émises par la formation lors d'une fracturation hydraulique, ou lors de vibrations émises par un vibreur ou des explosifs placés en surface, ou provenant d'une source sismique de puits.

Les bras pourront être des bras comportant des parallélogrammes ou des bras simples. Ils pourront comporter ou non des pointes d'ancrage sur leurs parties en contact avec la paroi du puits.

Les dispositifs d'actionnement pourront être des dispositifs mécaniques, hydrauliques ou électriques, classiques, connus de l'homme de l'art.

Sur les figures 4 et 5 on note que la portion de paroi extérieure du corps de sonde est sensiblement voisine au planaxial bissecteur relativement au plan de déploiement des bras, et à l'opposé de ceux-ci, est adaptée à permettre une bonne fixation directe du corps de la sonde sur la paroi du puits. Cette portion de paroi pourra être lisse ou comporter des éléments d'accrochage tels des pointes directement fixées au corps de la sonde.

**Revendications**

1. Dispositif d'ancrage d'un corps de sonde dans un puits, comportant des bras d'ancrage escamotables dont l'ouverture a pour effet de décentrer le corps de sonde et le plaquer contre la paroi du puits, caractérisé en ce qu'il comporte un couple de bras (19, 20) disposés sensiblement à un même premier niveau dudit axe (4) de la sonde (3) et décalés angulairement l'un par rapport à l'autre relativement à l'axe (4) de ladite sonde, en ce que le corps de la sonde est pourvu d'une portion de paroi extérieure au voisinage du plan bissecteur des plans de déploiement respectifs des bras dudit couple, et à l'opposé de ceux-ci, comportant des éléments adaptés à permettre une bonne application dudit corps de la sonde contre la paroi du puits, en ce que ladite sonde comporte au moins un élément de mesure directionnel et en ce que ledit élément de mesure (14, 15) est placé dans le plan de déploiement de l'un des bras.

2. Dispositif selon la revendication 1, caractérisé en ce que les bras (19, 20) de chaque couple sont décalés d'un angle de 90° par rapport à l'axe (4) de ladite sonde (3).

3. Dispositif selon la revendication 1, caractérisé en ce que les bras (19, 20) de chaque couple sont décalés d'un angle de 120° par rapport à l'axe (4) de ladite sonde (3).

4. Dispositif selon l'une des revendications précédentes, caractérisé en ce qu'il comporte un deuxième couple de bras (32, 33) situés à un deuxième niveau (31) que celui du premier couple de bras (29, 30), les bras correspondants des deux couples étant disposés dans le même plan de déploiement.

5. Dispositif selon la revendication 4, caractérisé en ce que lesdits premier et deuxième niveaux (28, 31) sont situés de part et d'autre d'éléments de mesure (27) équipant ladite sonde (3).

6. Sonde comportant un dispositif d'ancrage selon l'une des revendications précédentes, caractérisée en ce que l'élément de mesure est unidirectionnel, en ce que le plan de déploiement dudit bras contient l'axe (4) de la sonde (3) et en ce que la direction de mesure (17) dudit élément est sensiblement perpendiculaire à l'axe (4) de ladite sonde (3).

7. Sonde comportant un dispositif d'ancrage selon la revendication 4, caractérisé en ce que ledit élément de mesure est situé sensiblement au voisinage de l'un desdits niveaux (7).

8. Sonde selon l'une des revendications 6 et 7, caractérisée ence qu'elle comporte deux éléments de mesure directionnels dont l'un est placé dans le plan de déploiement de l'un des bras et dont l'autre est placé dans le plan de déploiement d'un autre bras.

9. Sonde selon la revendication 8, caractérisée en ce que lesdits bras sont placés à un même niveau dudit axe de la sonde et en ce que les éléments de mesure sont placés sensiblement au voisinage de ce même niveau.

10. Sonde selon l'une des revendications 6 à 9, caractérisée en ce qu'elle comporte quatre éléments de mesure unidirectionnels dont chacun est adapté à effectuer une mesure selon une direction, en ce que l'un desdits éléments est positionné pour faire une mesure suivant l'axe de la sonde, en ce que les trois autres éléments sont positionnés pour faire des mesures suivant un plan perpendiculaire à l'axe (4) de la sonde (3) et en ce que les directions de mesure de ces trois autres éléments de mesure correspondent sensiblement aux trois plans passant par l'axe de la sonde et par les trois endroits de contact de la sonde ou de son dispositif d'ancrage avec les parois du puits.

## Claims

1. Device for anchoring the body of a probe in a well, comprising retractable anchorage arms, these anchorage arms, when open, causing the body of the probe to be offset and positioned in contact against the wall of the well, characterised in that it comprises a pair of arms (19, 20) arranged substantially at the same initial level of the said axis (4) of the probe (3) and offset angularly relative to each other and relative to the axis (4) of the said probe and in that the body of the probe is associated with a portion of the external wall in the vicinity of a plane bisecting the respective planes of extension of the arms of the said pair and opposite to these, comprising elements designed to permit correct application of the said body of the probe against the wall of the well, in that the said probe comprises at least one directional measurement element and in that the said measurement element (14, 15) is placed in the plane of extension of one of the arms.

2. Device in accordance with claim 1, characterised in that the arms (19, 20) of each pair are displaced by an angle of 90° relative to the axis (4) of the said probe (3).

3. Device in accordance with claim 1, characterised in that the arms (19, 20) of each pair are displaced by an angle of 120° relative to the axis (4) of the said probe (3).

4. Device in accordance with one of the preceding claims, characterised in that it comprises a second pair of arms (32, 33) situated at a second level (31) relative to that of the first pair of arms (29, 30), the corresponding arms of the two pairs being arranged in the same plane of extension.

5. Device in accordance with claim 4, characterised in that the first and second levels (28, 31) are situated on each side of the measurement elements (27) fitted to the said probe (3).

6. Probe comprising an anchorage device in accordance with one of the preceding claims, characterised in that the measurement element is unidirectional, in that the plane of extension of the said arm contains the axis (4) of the probe (3) and in that the direction of measurement (17) of the said element is substantially perpendicular to the axis (4) of the said probe (3).

7. Probe comprising an anchorage device in accordance with claim 4, characterised in that the said measurement element is situated substantially in the vicinity of one of the said levels (7).

8. Probe in accordance with one of claims 6 and 7, characterised in that it comprises two directional measurement elements, one being positioned in the plane of extension of one of the arms and the other being positioned in the plane of extension of another arm.

9. Probe in accordance with claim 8, characterised in that the said arms are positioned at the same level of the said axis of the probe and in that the measurement elements are positioned substantially in the vicinity of this same level.

10. Probe in accordance with one of claims 6 to 9, characterised in that it comprises four unidirectional measurement elements, each being designed to carry out a measurement in accordance with one direction, in that one of the said elements is positioned to carry out a measurement along the axis of the probe, in that the three other elements are positioned to carry out measurements in accordance with a plane perpendicular to the axis (4) of the probe (3) and in that the directions of measurement of these three other measurement elements correspond substantially to the three planes passing through the axis of the probe and through the three points of contact of the probe or its anchorage device with the walls of the well.

## Patentansprüche

1. Verankerungsvorrichtung für einen Sondenkörper in einem Bohrloch mit einklappbaren Verankerungsarmen, deren Öffnung zur folge hat, daß der Sondenkörper dezentriert und gegen die Bohrlochwandung gepresst wird, dadurch gekennzeichnet, daß sie ein Paar von Armen (19, 20) umfaßt, die im wesentlichen auf ein und dem gleichen ersten Niveau dieser Achse (4) der Sonde (3) angeordnet und im Winkel bezüglich einander relativ zur Achse (4) dieser Sonde angeordnet sind, daß der Körper der Sonde mit einem Außenwandungsteil benachbart der Winkelhalbierungsebene der jeweiligen Entfaltungsebenen der Arme dieses Paares und diesen einander gegenüber vorgesehen ist, mit Elementen, die so ausgelegt sind, daß sie ein gutes Anlegen dieses Körpers der Sonde gegen die Bohrlochwandung ermöglichen, daß diese Sonde wenigstens ein Richtmeßelement umfaßt und daß dieses Meßelement (14, 15) in der Entfaltungsebene eines der Arme angeordnet ist.

2. Vorrichtung nach Anspruch 1, dadurch gekennzeichnet, daß die Arme (19, 20) jedes Paares um einen Winkel von 90° bezogen auf die Achse (4) dieser Sonde (3) angeordnet sind.

3. Vorrichtung nach Anspruch 1, dadurch gekennzeichnet, daß die Arme (19, 20) jedes Paares um einen Winkel von 120° bezogen auf die Achse (4) dieser Sonde (3) versetzt sind.

4. Vorrichtung nach einem der vorhergehenden Ansprüche, dadurch gekennzeichnet, daß sie ein zweites Paar von Armen (32, 33) umfaßt, die auf einem zweiten Niveau (31) unterschiedlich zum ersten Paar von Armen (29, 30) angeordnet sind, wobei die entsprechenden Arme der beiden Paare in ein und der gleichen Entfaltungsebene angeordnet sind.

5. Vorrichtung nach Anspruch 4, dadurch gekennzeichnet, daß diese ersten und zweiten Niveaus (28, 31) zu beiden Seiten von diese Sonde (3) ausstattenden Meßelementen (27) angeordnet sind.

6. Sonde mit einer Verankerungsvorrichtung nach einem der vorhergehenden Ansprüche, dadurch gekennzeichnet, daß das Meßelement unidirektionell ausgebildet ist, daß die Entfaltungsebene dieses Armes die Achse (4) der Sonde (3) enthält und daß die Meßrichtung (17) dieses Elementes im wesentlichen senkrecht zur Achse (4) dieser Sonde (3) ist.

7. Sonde mit einer Verankerungsvorrichtung nach Anspruch 4, dadurch gekennzeichnet, daß dieses Meßelement im wesentlichen benachbart einem dieser Niveaus (7) ist.

8. Sonde nach einem der Ansprüche 6 und 7, dadurch gekennzeichnet, daß sie zwei Richtmeßelemente umfaßt, von denen eines in der Entfaltungsebene eines der Arme angeordnet ist und von der das andere in der Entfaltungsebene eines anderen Armes angeordnet ist.

9. Sonde nach Anspruch 8, dadurch gekennzeichnet, daß diese Arme auf ein und dem gleichen Niveau dieser Sondenachse angeordnet sind und daß die Meßelemente im wesentlichen benachbart eben dieses Niveaus angebracht sind.

10. Sonde nach einem der Ansprüche 6 bis 9, dadurch gekennzeichnet, daß sie vier unidirektionelle Meßelemente umfaßt, von denen jedes so ausgelegt ist, daß es eine Messung längs einer Richtung durchführt, daß eines dieser Elemente so positioniert ist, daß es eine Messung entsprechend der Achse der Sonde macht, daß die drei anderen Elemente so positioniert sind, daß sie Messungen entsprechend einer Ebene senkrecht zur Achse (4) der Sonde (3) durchführen und daß die Meßrichtungen dieser drei anderen Meßelemente im wesentlichen den drei Ebenen entsprechen, die durch die Achse der Sonde und durch die drei Kontaktorte der Sonde oder ihrer Verankerungsvorrichtung mit den Wandungen des Bohrlochs gehen.

EP 0 294 440 B1

**FIG.1**

**FIG.2**

**FIG.3**

**FIG.4**

**FIG.5**

**FIG.6**

7